# FASCICULE DE BREVET EUROPEEN

(11) **EP 0 862 935 B1**
(45) Date de publication et mention de la délivrance du brevet: **04.06.2003**
(21) Numéro de dépôt: 98490001.9
(22) Date de dépôt: 09.01.1998
(51) Int. Cl.: B01D 1/06, B01D 3/34, B01D 3/38

(54) **Dispositif de séparation d'au moins un gaz contenu dans un fluide et installation comprenant un tel dispositif**
Vorrichtung zur Trennung von einem Gas aus einer Flüssigkeit und Anlage mit einer solchen Vorrichtung
Apparatus to separate at least one gas present in a fluid and installation containing such an apparatus

(30) Priorité: 10.01.1997 FR 9700355
(43) Date de publication de la demande: 09.09.1998
(73) Titulaire: France EVAPORATION, 59000 Lille (FR)
(72) Inventeur: Dehay, Alain, 59840 Lompret (FR)
(74) Mandataire: Ecrepont, Robert

(56) Documents cités:
- EP-A- 0 100 263
- WO-A-92/22366
- FR-A- 2 452 947
- FR-A- 2 564 330
- JP-A- 51 138 577
- US-A- 3 491 821
- US-A- 4 090 922
- DATABASE WPI Section Ch, Week 7703 Derwent Publications Ltd., London, GB; Class J01, AN 77-04502Y XP002043594 & JP 51 138 577 A (HITACHI LTD) , 30 novembre 1976
- ROBERT H. PERRY, DON W. GREEN, JAMES O. MALONEY: "Perry's Chemical Engineers' Handbook - 6th edition, Section 11, pages 31-39", 1985, MCGRAW-HILL BOOK COMPANY, SINGAPORE

## Description

L'invention se rapporte à un dispositif de séparation d'au moins un produit dissous dans un fluide, tel un gaz ou un solvant, par entraînement à la vapeur.

Elle se rapporte également à l'installation comprenant un évaporateur et un tel dispositif de séparation.

Classiquement, pour séparer un gaz ou un solvant contenu dans un liquide, on fait appel à des dispositifs de séparation par entraînement à la vapeur.

Classiquement, un dispositif de séparation par entraînement de vapeur comprend :
- une chambre de traitement sensiblement verticale,
- en partie supérieure de la chambre, un moyen pour introduire le liquide à traiter et au moins le faire ruisseler au long de surfaces présentées par des éléments occupant le volume de la chambre, et
- à la base de la chambre de traitement, un moyen d'introduction d'une vapeur, dite de transport, qui se déplace vers le haut de la chambre et dont la quantité introduite est largement inférieure au volume de liquide introduit en partie haute.

Sous l'effet des différentes pressions partielles des produits contenus dans le liquide et des conditions de pression/température dans l'enceinte de traitement, il se produit un dégazage et le gaz ou le solvant contenu dans le fluide qui ruisselle est entraîné par la vapeur de transport ce qui nettoie le fluide introduit en partie supérieure.

En partie basse, on retrouve alors un produit propre et, en partie haute, une vapeur concentrant les gaz ou les solvants extraits du fluide introduit en partie supérieure.

Cette vapeur concentrant ces produits extraits est évacuée de la chambre de traitement lorsqu'elle arrive en partie supérieure.

La durée pendant laquelle le fluide est en contact avec la vapeur de transport est un facteur important car, dans ces dispositifs, le fluide à nettoyer ne circule généralement qu'une fois.

Egalement, la température du liquide introduit est identique à la température de vapeur pour que l'opération soit adiabatique.

Pour cette opération, on connaît les colonnes à garnissage ou à plateaux.

Ces dispositifs sont souvent disposés en aval d'un évaporateur de grande capacité ou d'une pluralité d'évaporateurs de plus petites tailles.

L'objectif de ces installations, dites d'évaporation, est de concentrer un produit liquide contenant une forte proportion d'eau par élimination de l'eau.

Classiquement, un évaporateur est constitué par une pluralité de tubes verticaux qui, placés dans une enceinte mise en pression, sont chauffés de l'extérieur par de la vapeur.

Le liquide à concentrer par évaporation est introduit en partie supérieure de la chambre et ce, à l'intérieur des tubes et coule à l'intérieur de ceux-ci.

Sous l'effet de la chaleur, l'eau s'évapore et le liquide récupéré en partie basse des tubes se trouve alors plus concentré que celui introduit en partie haute.

Sauf à prévoir des tubes de longueur démesurée, dans un évaporateur, le liquide récupéré en partie basse n'étant pas suffisamment concentré, il est réintroduit en partie haute pour recommencer un cycle et/ou est introduit dans un autre évaporateur.

En reprenant le liquide partiellement concentré et en lui faisant subir la même opération, on parvient à augmenter progressivement la concentration du liquide introduit au départ.

On obtient ainsi un liquide concentré, encore appelé liqueur, et de la vapeur d'eau qui peut être ensuite condensée pour former les condensats.

Cette technique d'évaporation est utilisée pour concentrer notamment la pollution contenue dans les effluents afin notamment d'en réduire le volume et de traiter ultérieurement les éléments polluants.

Si l'évaporation concentre alors la majorité des éléments polluants dans la liqueur, certains composants polluants et notamment, les plus volatiles, se retrouvent dans la vapeur d'eau puis les condensats.

Le volume de ces condensats étant relativement important, on les introduit dans un dispositif de séparation par entraînement par vapeur permettant de concentrer les gaz ou solvants polluants dans un faible volume.

Les dispositifs de séparation sont malheureusement de relativement grande taille pour fonctionner avec des installations d'évaporation relativement importantes.

Concevoir un dispositif de séparation plus petit est possible mais le coût de fabrication devient alors démesuré.

En conséquence, on ne traite pas les condensats et simplement on les rejette.

On connaît une installation (JP-51 138 577) où les surfaces, au long desquelles s'écoule le liquide, sont constituées par les surfaces internes de tubes sensiblement verticaux dits de dégazage disposés dans une enceinte dans laquelle est introduite de la vapeur dite de chauffage dont la température est supérieure à la température d'introduction du liquide à dégazer de sorte que, tout au long du déplacement du liquide par gravité, il se forme de petites bulles de gaz qui remontent les tubes à contre courant du liquide et qui sont ensuite extraites de la chambre en partie supérieure.

Un des résultats que l'invention vise à obtenir est notamment, de remédier aux inconvénients précités et, à cet effet, l'invention a pour objet un dispositif de séparation d'un gaz ou solvant contenu dans un fluide du type précité, caractérisé en ce qu'il comprend une pompe à chaleur qui comprime la vapeur de transport porteuse du gaz ou du solvant, laquelle vapeur de transport, extraite en partie supérieure, est introduite ensuite dans l'enceinte pour constituer une fraction de la vapeur de chauffage.

L'invention a également pour objet une installation comprenant un évaporateur et un dispositif de séparation par entraînement à la vapeur selon l'invention.

L'invention sera comprise à l'aide de la description ci-aprés faite à titre d'exemple non limitatif en regard du dessin ci-annexé qui représente schématiquement :

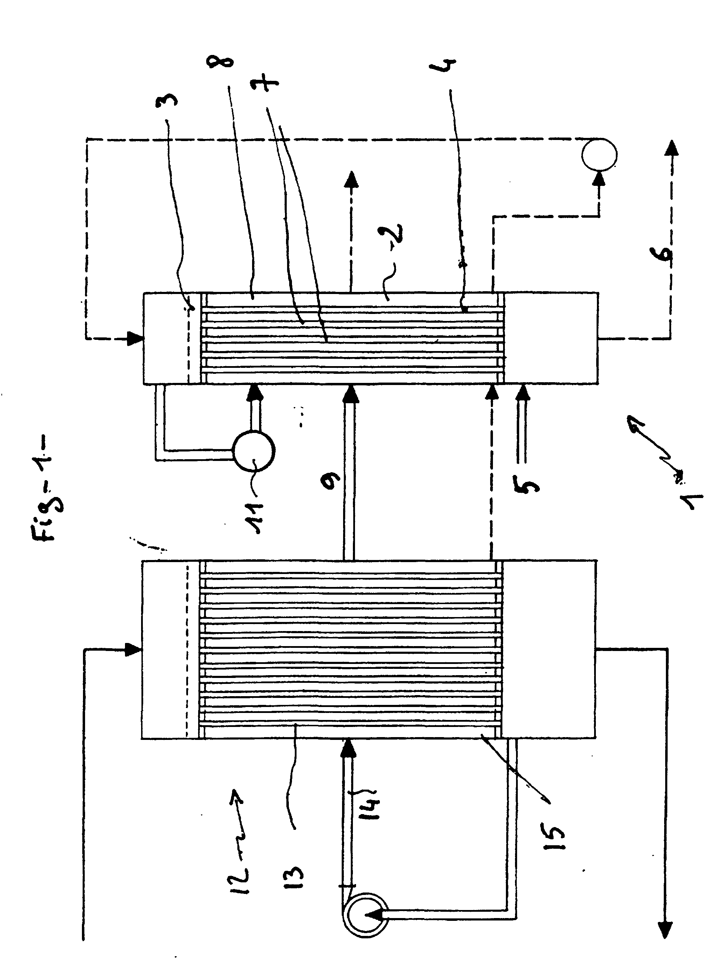

- figure 1 : une installation comprenant un évaporateur et un dispositif de séparation selon l'invention,
- figure 2 : une variante d'installation.

En se reportant au dessin, on voit un dispositif 1 de séparation par entraînement à la vapeur permettant de séparer un gaz contenu dans un liquide.

Le dispositif comprend :
- une chambre 2 de traitement sensiblement verticale,
- en partie supérieure de la chambre un moyen 3 pour introduire le liquide à traiter et le faire ruisseler au long de surfaces 4 présentées par des éléments occupant partiellement le volume de la chambre et
- à la base de la chambre de traitement, d'une part un moyen 5 d'introduction d'une vapeur dite de transport qui se déplace vers le haut de la chambre et d'autre part un moyen 6 pour évacuer le liquide nettoyé.

Les surfaces 4, au long desquelles s'écoule le liquide, sont constituées par les surfaces internes de tubes 7 sensiblement verticaux dits tubes de dégazage disposés dans une enceinte 8 dans laquelle est introduite de la vapeur 9 dite de chauffage dont la température est supérieure à la température d'introduction du liquide à dégazer de sorte que, tout au long du déplacement du liquide par gravité, il se forme de petites bulles de gaz qui remontent les tubes à contre courant du liquide et qui sont ensuite extraites de la chambre en partie supérieure.

De préférence, le dispositif comprend une pompe 11 à chaleur qui comprime la vapeur de transport porteuse du gaz ou solvant et extraite en partie supérieure et l'introduit ensuite dans l'enceinte 8 précitée pour constituer une fraction de la vapeur de chauffage.

Cette pompe à chaleur peut être un thermo-compresseur ou un compresseur de vapeur.

Cette vapeur de chauffage se condense partiellement dans l'enceinte et l'ensemble constitué par les tubes 7 et l'enceinte 8 constitue un condenseur.

Cette méthode évite notamment de faire appel à un condenseur qui, dans les procédés connus, est placé directement en sortie du dispositif de séparation.

Le dispositif de séparation de gaz par entraînement à la vapeur est disposé en aval d'un évaporateur 12 comprenant des tubes 13 dits d'évaporation disposés verticalement dans une chambre 15 dite de chauffage dans laquelle est introduite une vapeur 14 chauffant la paroi externe desdits tubes d'évaporation.

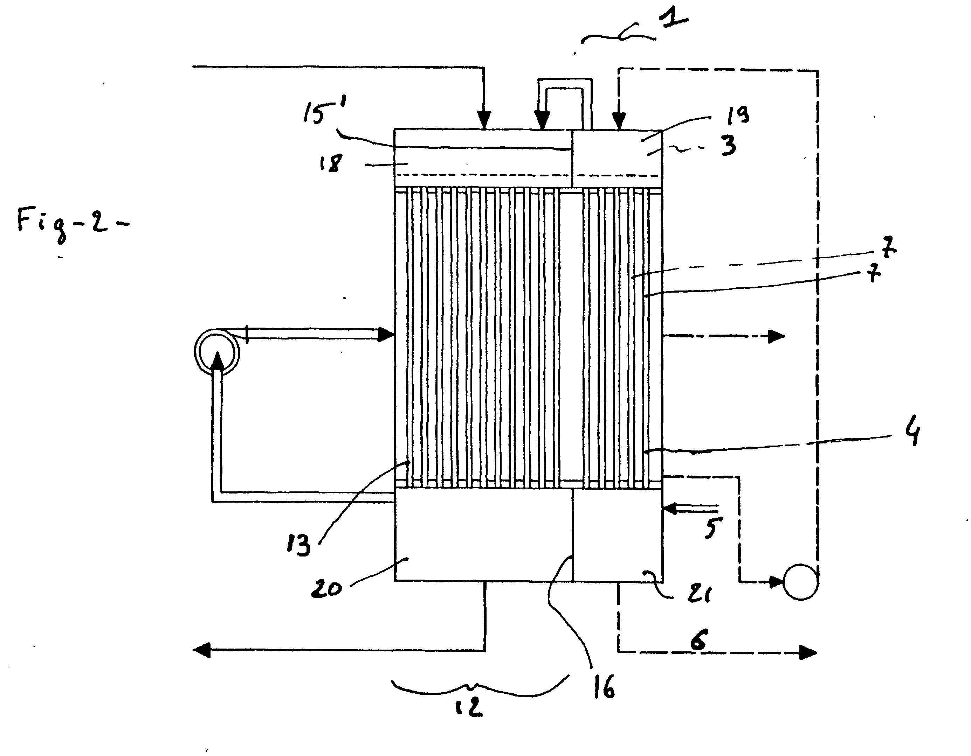

Selon une caractéristique de l'invention (figure 2) :
- d'une part, la chambre de chauffage de l'évaporateur loge également les tubes 7 dits de dégazage constituant les surfaces de ruissellement du dispositif de séparation de sorte que c'est la même vapeur qui baigne l'ensemble des tubes et,
- d'autre part l'installation comprend en partie haute et basse au moins des parois 15', 16 de séparation isolant :
   . la zone 18 d'introduction du liquide à concentrer de la zone 19 du séparateur où les condensats sont introduits dans les tubes de dégazage et la vapeur chargée de gaz extraite et
   . la zone 20 de récupération de la liqueur concentrée de la zone 21 d'évacuation du liquide nettoyé.

Cette dernière solution est extrêmement intéressante car en modifiant très peu une partie d'un évaporateur surdimensionné par rapport aux quantités de liquide à évaporer on peut obtenir une installation constituée à la fois d'un évaporateur et d'un dispositif de traitement par vapeur.

Egalement, on peut faire l'économie d'une pompe à chaleur en introduisant la vapeur de transport extraite en partie haute du dispositif de séparation dans l'évaporateur pour servir d'appareil thermique.

C'est également une installation à faible coût en énergie.

## Revendications

1. Dispositif de traitement d'effluents liquides contenant des gaz ou solvants polluants dissous, ce dispositif comprenant un séparateur par entraînement à la vapeur (1) pourvu:
- d'une chambre de traitement (2) délimitant une enceinte (8) dans laquelle sont disposés des tubes de dégazage (7) sensiblement verticaux ;
- de moyens d'introduction (5) d'une vapeur de transport dans la partie inférieure des tubes de dégazage (7) ;
- de moyens d'introduction (3) situés dans la partie supérieure de la chambre de traitement (2), pour envoyer les condensats à traiter dans les tubes de dégazage (7) ;
- de moyens d'introduction, dans l'enceinte (8) d'une vapeur de chauffage (9) dont la température est supérieure à la température d'introduction dans les tubes (7) des condensats à traiter ;
- de moyens d'évacuation (6), en partie inférieure de la chambre de traitement (2), du condensat traité qui a ruisselé par gravité le long des surfaces internes des tubes de dégazage (7), à contre-courant de la vapeur de transport chargée en gaz ou solvant extrait du condensat ruisselant dans les tubes (7) ;
- de moyens d'extraction, en partie supérieure de la chambre de traitement (2) de la vapeur de transport chargée en gaz ou solvant extrait du condensat traité,
**caractérisé en ce qu'**il comprend :
- une pompe à chaleur (11) qui, alimentée en vapeur de transport chargée en gaz ou solvant extrait du condensat traité, comprime cette vapeur de transport chargée en gaz ou solvant et l'introduit ensuite dans l'enceinte (8) pour la mélanger à la vapeur de chauffage (9) ;
- un évaporateur (12), comprenant des tubes d'évaporation (13) disposés sensiblement verticalement dans une chambre de chauffage (15), des moyens assurant l'introduction d'une vapeur (14) chauffant la paroi externe desdits tubes d'évaporation (13), l'évaporateur (12) comprenant des moyens d'introduction des effluents pollués à concentrer dans une zone (18) supérieure de la chambre de chauffage (15) ces effluents liquides étant concentrés par évaporation de solvants, le liquide récupéré en partie basse des tubes d'évaporation (13) formant une liqueur concentrée récupérée dans une zone (20) inférieure de la chambre de chauffage (15), la chambre de chauffage (15) de l'évaporateur (12) et la chambre de traitement du dispositif de séparation (1) définissent une seule et même enceinte logeant les tubes de dégazage (7) et les tubes d'évaporation (13), ces tubes (7,13) baignant dans une même vapeur de chauffage.

2. Dispositif selon la revendication 1, **caractérisé en ce qu'**il comprend des parois (15',16) isolant :
- d'une part, en partie haute de l'enceinte, la zone (18) d'introduction de l'effluent à concentrer de la zone (19) d'introduction des condensats ;
- d'autre part, en partie basse de l'enceinte, la zone (20) de récupération de la liqueur concentrée de la zone (21) d'évacuation du liquide traité.

3. Dispositif de séparation selon la revendication 1 ou 2 **caractérisé en ce que** la pompe à chaleur (11) comprend un thermo-compresseur ou un compresseur de vapeur.

## Patentansprüche

1. Vorrichtung zur Behandlung von flüssigen Abströmen, die gelöste umweltschädliche Gase oder Lösungsmittel enthalten, wobei diese Vorrichtung, die einen Dampfabtreibungs-Separator (1) umfasst, ausgestattet ist mit:
- einer Behandlungskammer (2), die einen Behälter (8) begrenzt, in dem im Wesentlichen senkrecht angeordnete Gasabscheidungs-Rohre (7) angeordnet sind;
- Einrichtungen (5) zum Einführen eines Transport-Dampfes in den unteren Abschnitt der Gasabscheidungs-Rohre (7);
- Einrichtungen (3), die im oberen Abschnitt der Behandlungskammer (2) angeordnet sind, zur Überführung der zu behandelnden Kondensate in die Gasabscheidungs-Rohre (7);
- Einrichtungen zur Einführung eines Heizdampfes (9), dessen Temperatur oberhalb der Einführungstemperatur der zu behandelnden Gase in die Rohre (7) liegt, in den Behälter (8);
- Einrichtungen (6), um aus dem unteren Abschnitt der Behandlungskammer (2) das behandelte Kondensat abzuziehen, das unter dem Einfluss der Schwerkraft entlang der inneren Oberflächen der Gasabscheidungs-Rohre (7) im Gegenstrom zu dem Transportdampf heruntergerieselt ist, der mit aus dem in den Rohren (7) herunterrieselnden Kondensat extrahiertem Gas oder Lösungsmittel beladen ist;
- Einrichtungen im oberen Abschnitt der Behandlungskammer (2) zum Extrahieren des Transportdampfes, der mit aus dem behandelten Kondensat extrahlertem Gas oder Lösungsmittel beladen ist,
**dadurch gekennzeichnet, dass** die Vorrichtung umfasst:
- eine Wärmepumpe (11), die, gespeist mit Transportdampf, der mit Gas oder Lösungsmittel beladen ist, das aus dem behandelten Kondensat extrahiert wurde, diesen mit Gas oder Lösungsmittel beladenen Transportdampf komprimiert und anschließend in den Behälter (8) einführt, um ihn mit dem Heizdampf (9) zu vermischen;
einen Verdampfer (12), der umfasst Verdampfungsrohre (13), die im Wesentlichen vertikal in einer Erhitzungskammer (15) angeordnet sind, Einrichtungen, welche die Einführung eines Dampfes (14) gewährleisten, der die äußere Wand der Verdampfungsrohre (13) erwärmt, wobei der Verdampfer (12) Einrichtungen zur Einführung der verunreinigten, zu konzentrierenden Abströme in eine obere Zone (18) der Erwärmungskammer (15) umfasst, wobei diese flüssigen Abströme durch Verdampfen von Lösungsmitteln konzentriert werden und die im unteren Teil der Verdampfungsrohre (13) zurückgewonnene Flüssigkeit in einer unteren Zone (20) der Erwärmungskammer (15) eine zurückgewonnene konzentrierte Flüssigkeit bildet, die Erwärmungskammer (15) des Verdampfers (12) und die Behandlungskammer der Trenneinrichtung (1) ein und denselben Behälter definieren, in dem die Gasabscheidungs-Rohre (7) und die Verdampfungsrohre (13) angeordnet sind, wobei diese Rohre (7, 13) von dem gleichen Heizdampf umspült werden.

2. Vorrichtung nach Anspruch 1, **dadurch gekennzeichnet, dass** sie Wände (15', 16) aufweist, die gegeneinander isolieren:
- einerseits im oberen Teil des Behälters die Zone (18) zur Einführung der zu konzentrierenden Abströme gegenüber der Zone (19) zur Einführung der Kondensate;
- andererseits im unteren Teil des Behälters die Zone (20) zur Rückgewinnung der konzentrierten Flüssigkeit gegenüber der Zone (21) zum Abziehen der behandelten Flüssigkeit .

3. Trennvorrichtung nach Anspruch 1 oder 2, **dadurch gekennzeichnet, dass** die Wärmepumpe (11) einen Thermokompressor oder einen Dampfkompressor umfasst.

## Claims

1. Device for the treatment of liquid effluents containing gases or dissolved polluting solvents, this device comprising a separator by entrainment in vapour (1), provided with:
- a treatment chamber (2) delimiting an enclosure (8) in which substantially vertical degassing tubes (7) are disposed;
- means of introducing (5) a transporting vapour into the lower portion of the degassing tubes (7);
- introduction means (3), situated in the upper portion of the treatment chamber (2), to send the condensates for treatment into the degassing tubes (7);
- means of introducing into the enclosure (8) a heating vapour (9), the temperature of which is higher than the temperature for introducing into the tubes (7) the condensates for treatment;
- means of evacuating (6), in the lower portion of the treatment chamber (2), the treated concentrate which has run by gravity down the internal surfaces of the degassing tubes (7), in a contrary direction to the transporting vapour loaded with gas or solvent extracted from the condensate running into the tubes (7);
- means of extracting, in the upper portion of the treatment chamber (2), the transporting vapour loaded with gas or solvent extracted from the treated condensate,
**characterised in that** it comprises:
- a heat pump (11) which, fed with transporting vapour which is loaded with gas or solvent extracted from the treated condensate, compresses this transporting vapour loaded with gas or solvent and then introduces it into the enclosure (8) to mix it with the heating vapour (9);
- an evaporator (12), comprising evaporation tubes (13) which are disposed substantially vertically in a heating chamber (15), means providing the introduction of a vapour (14) heating the external wall of said evaporation tubes (13), the evaporator (12) comprising means of introducing the polluted effluents to be concentrated into an upper (18) region of the heating chamber (15), these liquid effluents being concentrated by evaporation of solvents, the recovered liquid in the lower portion of the evaporation tubes (13) forming a concentrated liquor recovered in a lower (20) region of the heating chamber (15), the heating chamber (15) of the evaporator (12) and the treatment chamber of the separation device (1) defining one and the same enclosure housing the degassing tubes (7) and the evaporation tubes (13), these tubes (7, 13) being immersed in the same heating vapour.

2. Device according to claim 1, **characterised in that** it comprises walls (15', 16) isolating:
- on the one hand, in the top portion of the enclosure, the region (18) for introducing the effluent to be concentrated from the region (19) for introducing the condensates;
- on the other hand, in the bottom portion of the enclosure, the region (20) for recovering the concentrated liquor from the region (21) for evacuating the treated liquid.

3. Separation device according to claim 1 or 2, **characterised in that** the heat pump (11) comprises a thermo-compressor or a vapour compressor.
